(19) **Europäisches Patentamt / European Patent Office / Office européen des brevets**

(11) **EP 4 067 894 A1**

(12) # EUROPEAN PATENT APPLICATION

(43) Date of publication:
05.10.2022  Bulletin 2022/40

(21) Application number: 21165689.7

(22) Date of filing: 29.03.2021

(51) International Patent Classification (IPC):
**G01N 29/04** (2006.01)    **G01N 29/11** (2006.01)

(52) Cooperative Patent Classification (CPC):
**G01N 29/043; G01N 29/045; G01N 29/11;**
G01N 2291/012; G01N 2291/015; G01N 2291/0258;
G01N 2291/02854; G01N 2291/0425;
G01N 2291/0427

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NEDERLANDSE ORGANISATIE VOOR
TOEGEPAST-
NATUURWETENSCHAPPELIJK ONDERZOEK
TNO**
**2595 DA 's-Gravenhage (NL)**

(72) Inventors:
• **VOLKER, Arno Willem Frederik**
**2595 DA 's-Gravenhage (NL)**
• **MERKS-SWOLFS, Egon Jacobus Wilhelmus**
**2595 DA 's-Gravenhage (NL)**
• **VAN DER BURG, Dennis Wilhelmus**
**2595 DA 's-Gravenhage (NL)**
• **DUIJSTER, Adrianus Johannes**
**2595 DA 's-Gravenhage (NL)**

(74) Representative: **V.O.**
**P.O. Box 87930**
**2508 DH Den Haag (NL)**

(54) **ACOUSTIC INSPECTION DEVICE AND INSPECTION METHOD USING AN INVERSE WAVE FIELD PROPAGATION MODEL**

(57)    A position dependent wave vector amplitude of vibrations on a surface of a structure is determined from acoustic measurements using a sensing device at distance from the surface. The device contains an array of microphones in a fluid medium outside the structure. Vibrations in the structure, which travel through the structure e.g. as Lamb waves. This generates sound outside the structure by leakage of sound waves from the surface of the structure. The microphones obtain measured signals from the sound. Furthermore, a measurement of such as distance is obtained that depends on the measurement position where the array of microphones is provided. The parameter is used in an inverse wave field propagation model for sound propagation in the fluid medium between the surface of the structure and the array of microphones. The inverse wave field propagation model is applied to the measured signals to obtain a position dependent estimation of the sound amplitude and/or phase at the surface. The wave vector amplitude of the vibration as a function of position on the surface is computed from the position dependent estimation.

# Fig.1

EP 4 067 894 A1

**Description**

Field of the invention

The invention relates to an acoustic inspection device and inspection method for inspecting a plate of solid material.

Background

Irregularities in the propagation of Lamb waves through a plate can be used to detect thickness variations in the plate. For a given frequency, defects in the plate give rise to ultrasound energy at other wavelengths than those defined for that frequency by the dispersion relation for the Lamb modes. Frequency-wavenumber (f-k) selective detection at combinations of frequency-wavenumber outside those defined by the dispersion relation for Lamb wave modes can be used to detect defects.

A laser Doppler vibrometer may be used to detect such defects from a distance by transmitting laser light to the plate and receive back reflected light. Standing wave energy of the vibrations may be isolated by extracting the energy of propagating waves. Use of a laser Doppler vibrometer to detect Lamb waves in this way is described in an article by Flynn et al. titled "Toward utilizing Full-field Laser-Ultrasound for Practical Nondestructive Inspection with Acoustic Wavenumber Spectroscopy" published in 2018 IEEE International Ultrasonics Symposium (IUS), Kobe, Japan, 2018, pp. 1-7. Flynn et al. use harmonic excitation to enable use of low power lasers and rapid scanning. Wave number spectroscopy is used to detect defects. This method uses steady state excitation at a single frequency. A high-pass wavenumber filter is used to extract only the lowest order asymmetric Lamb wave mode (A0). The peak intensity in the filtered wavenumber intensity diagram is selected, which corresponds to the AO mode.

Use of a laser Doppler vibrometer is also described in an article titled "Visualization of hidden delamination and debonding in composites through noncontact laser ultrasonic scanning" published in Composites Science and Technology 100 (2014) 10-18. However, the authors of this article have filed patent application KR101693710, which notes that laser scanning ultrasound imaging technology has several limitations that real-time imaging is impossible, citing a low signal-to-noise ratio (SNR) of the acquired signals, and the need for a high power laser for excitation.

KR101693710 instead proposes the use of mechanical excitation and the use of a MEMS microphone array to sense leakage of sound into the air due to Lamb waves in a plate. A device is disclosed that detects defects in a plate by means of leakage of Lamb waves from the plate. The device comprises a Piezo transmitter on the plate to generate the Lamb waves in the plate and an array of Micro Electro Mechanical System (MEMS) microphones outside the plate for time and position dependent measurements of ultrasound waves created by Lamb waves that leak out of the plate. The device applies adaptive frequency-wavenumber (f-k) selective filtering to the time and position dependent measurements to extract ultrasound energy due to defects. KR101693710 applies such (f-k) selective detection to ultrasonic energy that has leaked from the plate into the air. The leakage makes it possible to perform measurement of frequency-wavenumber combinations (f-k) of the vibrations in the plate with microphones close to the plate.

However moving the microphones close to the plate to many positions during a scan over a large plate area can make this kind of inspection difficult and slow and can create the risk of damage to the plate.

Summary

Among others it is an object to provide for an improved sound leakage based inspection device and method that provides for use of leakage of sound from the surface of a structure such as a plate into a fluid medium, such as air.

A method according to claim 1 is provided. The method may be applied using Lamb waves in a plate as structure under inspection, but it may also be used with interface waves in a structure, such as a Rayleigh wave or Scholte wave to measure a property such as local stiffness variation. It has been found that by additionally obtaining at least one parameter of an inverse wave field propagation model, it is possible to obtain a direct velocity map that is useful for accurate detection of local thickness and/or stiffness variations by applying the inverse wave field propagation model to signals measured with an array of microphones at a distance from the structure. In an example, the at least one parameter may represent a displacement distance between the plate and the array of microphones.

This method makes it easier to use acoustic leakage for mapping by making it possible to move and keep the microphones at some distance from the surface of the structure, while maintaining high mapping resolution. A reduction of resolution may arise because the surface of the structure refracts the sound as the vibrations leak from the surface to the surrounding fluid medium, that is, it changes the direction of propagation and thereby the apparent wavelength perceived at the array of microphones. Parts of sound that are generated by different wave phase velocities have different propagation directions between the plate surface and the array of microphones. This causes reception of mixed of sound with different phase velocities from different positions on the plate surface.

The application of the inverse wave field propagation model with at least one parameter that is adapted to the measurement position of the array of microphones relative the surface of the plate makes it possible to maintain much of the spatial resolution that can be measured at the surface of the plate. It has been found that this is feasible even when the distance between the plate and the array of microphones is so large that individual microphones receive a broad mix of soundwaves with different phase velocities from different locations on the surface of the plate.

In an embodiment wherein the surface of the plate is at least locally flat and the array of microphones is substantially flat and parallel to the local surface of the plate, the parameter of the inverse wave field propagation model can be obtained by obtaining a measurement of the distance between the surface of the plate and the array of microphones. In this embodiment, the inverse wave field propagation model is a predetermined mathematical expression for the inverse wave field propagation in the fluid medium between parallel flat surfaces, with this distance as a parameter. The measurement of the distance may be obtained by means of a distance sensor, or with the aid of the array of microphones.

However, the surface of the plate does not need to be flat. In an embodiment, an inverse wave field propagation model may be used together with parameters that express the shape of the surface.

The array of microphones may be a physical array containing microphones at different locations at the same time, for example in a flat plane of location and/or a regular two dimensional grid of locations. Alternatively, an at least partly synthetic array may be used, which is realized by moving at least one microphone relative to the structure along a direction transverse to the normal direction of at least part of the surface of the structure, and obtaining the measured signals in sync with the generation of the vibrations. For example, the at least one microphone may form a sub-array of microphones located at a linear array of locations at the same time, and the sub-array may be moved transverse to this linear array.

Detailed description of exemplary embodiments

These and other objects and advantages will become apparent from a description of exemplary embodiments with reference to the following figures.

Figure 1 shows an acoustic inspection device
Figure 2 shows a flow-chart of surface mapping
Figures 3a-c show a true surface map and reconstructed surface maps without computing the effect of applying the inverse wave field propagation
Figure 4 shows a flow chart of shape estimation
Figures 5a, b show surface maps reconstructed with inverse wave field propagation, without compensation for curvature
Figures 6 shows a reconstructed surface map of a curved surface with compensation for curvature

Detailed description of exemplary embodiments

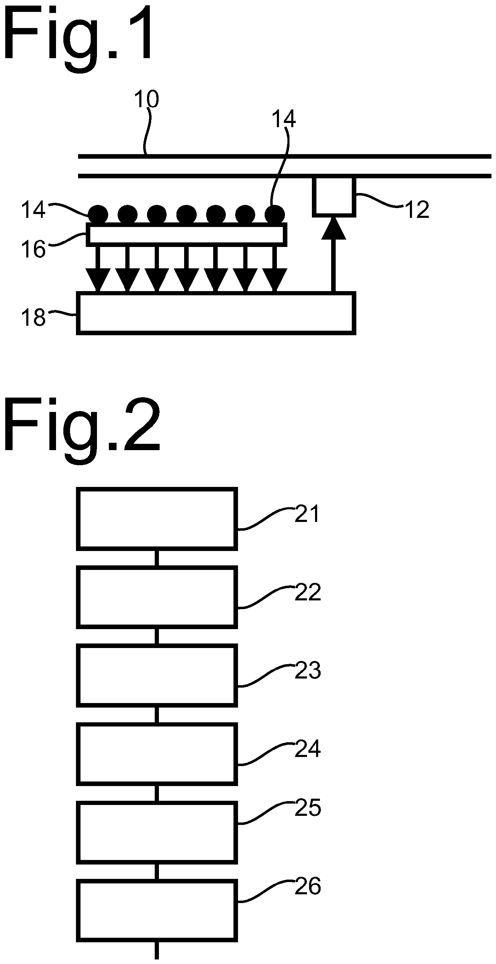

Figure 1 shows an acoustic inspection device together with a plate under inspection 10. The ultrasonic inspection device comprises a transducer 12, an array of microphones 14, a support structure 16 and a processing system 18. The array of microphones comprises microphones fixed to support structure 16, preferably in an array of positions. In an embodiment, microphones 14 are MEMS microphones (Micro Electro Mechanical System). A MEMS microphone is a device that comprises a pressure-sensitive diaphragm, e.g. a flexible membrane over an opening (e.g. a chamber) in a substrate, and a transducing element to convert flexing of the diaphragm into an electric signal. Such a device may be manufactured on the substrate using photolithographic techniques known from IC manufacturing. The MEMS microphone may also include an integrated preamplifier, an Analog-to-Digital converter, or any other electrical circuits that interface the MEMS element to external electrical systems. Such circuits may be included in an Application Specific Integrated Circuit (ASIC). MEMS microphones have the advantage that they provide for efficient conversion of sound vibrations in a gas like air into electric signals and that a dense array of microphones can easily be realized. MEMs accelerometers may be used as microphones. In an embodiment a linear array of 128 microphones 14 is used, but instead a 2D array may be used and of fewer or more microphones may be used. Processing system 18 is electronically coupled to transducer 12 and the microphones 14 of the array.

In an operational configuration, transducer 12 is in contact with plate 10. Microphones 14 are located at a distance from plate 10, e.g. at a distance between 50 to 250 mm, e.g. at 100 mm. The space between microphones 14 and plate 10 may be filled with air or water for example, and more generally with any fluid medium.

In an embodiment microphones 14 are moved in parallel to plate 10. The ultrasonic inspection device may comprise a motion actuator (not shown), such as a robot arm, whereon support structure 16 is mounted and the movement of which is controlled by processing system 18, for moving array of microphones 14 relative to plate 10.

Figure 2 shows a flow-chart of surface mapping. In a first step 21, processing system 18 controls transducer 12 to generate vibrations in plate 10. For example transducer 12 may be made to generate a pulse of vibrations at a single time domain frequency , e.g. a frequency in in the range of 20kHz-1MHz or 30-300kHz. The vibrations propagate as Lamb waves from the position of transducer 12 through plate 10. Although an embodiment using a single transducer 12 is discussed, it should be noted that a plurality of transducers at different positions on plate 10 may be used, preferably configured to transmit vibrations in a fixed phase relation relative to each other.

At the surface of plate 10 surface vibrations due to the Lamb waves create sound in the air surrounding plate 10, preferably ultrasound (as used herein the term "sound" covers both audible sound and ultrasound). In a second step 22, processing system 18 reads received sound signals from microphones 14. Such sound signals are due to sound created in the medium at the surface of plate 10 by vibrations of the surface of plate 10 due to Lamb waves in plate 10, and propagation of the created sound to microphones 14. Preferably the positions of the microphones are sufficiently close to each other so that spatial sampling of the sound at the positions of the microphones satisfies sampling criteria that suffice to enable reconstruction of a continuous sound field on the surface of the array.

Preferably, the measurements are performed in sync with the vibrations applied by transducer 12, e.g. by measuring phase difference between the signals at the microphones and the generated vibrations, or more generally measuring the signals at the microphones as a function of time from a reference time point in the generation of the vibrations. Using signals that are measured in sync makes it possible to synthesize measurements from at least one microphone over a large one or two dimensional range of microphone positions by moving the at least one microphone or an array of microphones 14 relative to plate 10. In this way a synthetic array of microphones may be realized. Means to synthesize an array of microphones comprise a memory to store the synced measurements obtained with the at least one microphone or array of microphones 14 at different positions. For example, when a linear (one dimensional) array is used, synced measurements over a synthetic two dimensional array can be synthesized.

In a third step 23, processing system 18 obtains at least one parameter of an inverse wave field propagation model for sound propagation in the fluid medium between the surface of the plate and the array of microphones at a measurement position where the array of microphones is provided relative to plate 10. In an embodiment wherein the inverse wave field propagation model has a distance between the array of microphones 14 and plate 10 as parameter, third step 23 may comprise obtaining a measurement of the distance .In this case the model may define a known mathematical formula to obtain the inverse wave field propagation with the distance as a parameter. Although the flow-chart shows that third step 23 is performed after second step 22, it should be noted that third step 23 may be performed earlier, even before first step 21. Processing system 18 may obtain the measurement of the distance from an external source, or from a part of the ultrasonic inspection device that measures this distance.

In a fourth step 24, processing system 18 computes the effect of applying the inverse wave field propagation model to the received sound signals. This will be discussed in more detail in the following. Subsequently, processing system 18 perform a fifth step 25 of computing a direct velocity map from the result of inverse wave field propagation. This will also be discussed in more detail in the following. Fifth step 25 may be followed by a sixth step 26 of displaying an image of a map of the velocity as a function of position on plate 10.

In an embodiment, array of microphones 14 may be moved relative to plate 10 to successive positions relative to plate 10, and first to fourth steps 21-24 may be repeated for each of the successive positions. Subsequently, a larger map of the velocity may be synthesized from the maps obtained using the successive positions.

In an embodiment, the inverse wave field propagation of fourth step 24 may be preceded by a step of applying time windowing to the received signal to exclude sound signals due to sound propagation between transducer 12 and microphones entirely through the air without involving Lamb waves (the latter generally arriving before the former).

Inverse wave field propagation

Fourth step 24 of computing the inverse surface model is used to make it possible to obtain a useful direct velocity map even when the array of microphones 14 is not directly adjacent to the surface of plate 10.

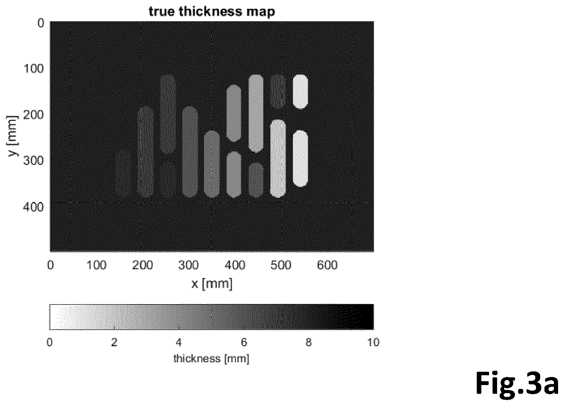

Figures 3a-c illustrate the effect of distance between array of microphones 14 is not directly adjacent to the surface of plate 10 when fourth step 24 is not used. Figure 3a shows a map wherein grey levels are used to represent position dependent thickness of a test plate. If array of microphones 14 would be adjacent to the surface of test plate 10, a substantially identical map can be obtained with the method of figure 2 without fourth step 24.

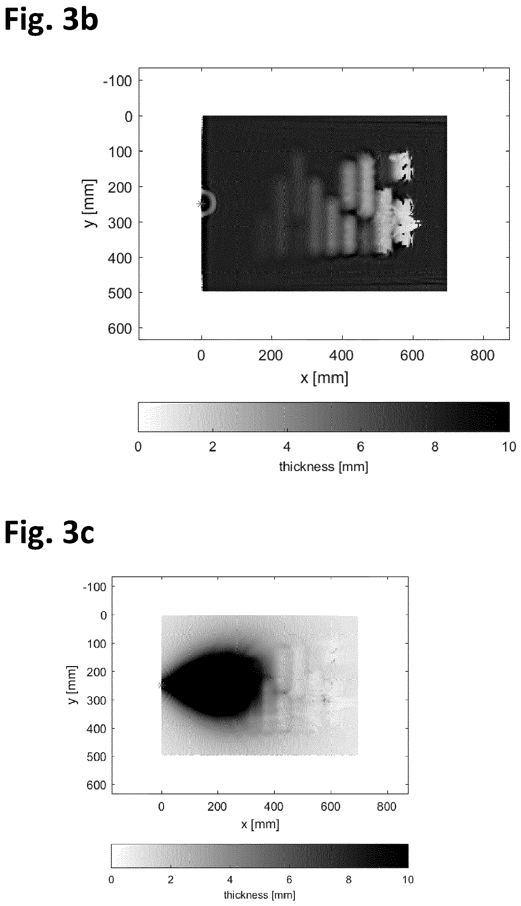

Figures 3b, c show the effect on the mapping of using an array of microphones 14 at a distance from of test plate 10, when the process of figure 2 is used without fourth step 24. Figure 3b shows the reconstructed thickness map obtained when the surface is flat and parallel to the plane of the array of microphones 14 at a distance from the array. As can be seen accuracy is lost, high spatial frequencies are lost and some artifacts occur.

Figure 3c shows the reconstructed thickness map when the surface is curved and at a distance from the array. By comparison with figure 3a it can be seen from the near white area in figure 3c high frequency variation has been lost as in the case of a flat plate at a distance figure 3b. Moreover, the fact that this near white area where figure 3a has dark area indicates that the overall value of the thickness has become inaccurate due to the curvature..

Application of the inverse wave field propagation model comprises computing the wave field at the surface of plate 10 from the wave field represented by the received sound signals. Application of the inverse wave field propagation model suppresses the effect of differences between refraction angle at the fluid medium-plate interface and wave spreading in the space between microphones 14 and plate 10 due to diffraction at defects in plate 10.

From the signal received by each of the microphones 14, a measured wave factor can be determined for the microphone. The wave factor (which should be distinguished from the wave vector) represents the amplitude and phase of the received signal at the microphone 14 relative to a common reference, e.g. relative to the vibrations of transducer 12. Methods for computing a wave field at a surface from wave factors measured at a distance from the surface are known per se, e.g. from measurements that sample a wave factor field on a sensing surface such as the plane of the array of microphones. The computation of the wave field at the surface of plate 10 may be performed by taking a sum over the positions of microphones of terms

$$P(x, y, omega)*exp(i*omega*r/c)*\cos(phi)*(1+i*omega*r/c)/r^2$$

Herein omega is the time domain cyclic frequency of the sound and c the speed of sound in the fluid medium between microphones 14 and the surface of plate 10. $P(x, y, omega)$ is the wave factor at a microphone at position x, y. "phi" is the angle between the normal to the array of microphones at position x, y, z, and the normal to the surface of plate 10 at the point on the surface of plate 10 for which the wave field at the surface of plate 10 is computed.

The quantity "r" is the distance from the microphone 14 at (x,y) and the position (x',y') on the surface of plate 10 for which the wave factor is computed, through the space between the array of microphones 14 and the surface of plate 10. The distance r and the angle phi depend on the shape of plate 10 and the relative position (distance and orientation) of array of microphones 14 relative to the surface of plate 10. The distance r and the angle phi as a function of location on plate 10 can be expressed in terms of parameters such as parameters of the shape of plate 10, and one or more parameters that define the relative position of array of microphones 14.

When the array of microphones 14 has a fixed orientation relative to plate 10 and the shape of the surface of plate 10 is known, the distance r for positions (x', y') can be computed using a measurement of a single distance D between reference points on the array of microphones 14 and the surface of plate 10, or other references as a parameter.

The distance D measurement(s) may be input into the acoustic inspection device based on measurement(s) with a device outside the acoustic inspection device. But preferably, the acoustic inspection device is configured to measure the distance(s) itself. For this, the acoustic inspection device may comprise any type of distance sensor, such as a laser distance sensor or an acoustic distance sensor for measuring distance from reflection from plate 10, or a mechanical distance sensor.

In an embodiment wherein acoustic distance sensing is used, a microphone 14 or microphones 14 from the array of microphones may be used in the measurement. For example, the acoustic inspection device may comprise a sound transmitter (not shown) in the fluid medium in fixed spatial relation to array of microphones 14. Processing system 18 may be configured to cause the sound transmitter to transmit a sound pulse, to detect reception of a reflection of the sound pulse by a flat part of plate 10 and to use the time delay between the transmission and reception to estimate the distance D. A non-perpendicular reflection may be used, when account is taken of the angles under which the microphone 14 is able to receives the reflection from different distances.

In an embodiment wherein plate 10 is flat and the array of microphones 14 is parallel to plate 10 application of the inverse wave field propagation model may comprise the use of a Fourier transform domain adjustment in the execution of fourth step 24 by processing system 18. In a first sub-step 241 of fourth step 24 the received signals are used to compute the wave factors. First sub-step 241 is followed by a second sub-step 242 of computing a spatial Fourier transform of an array of the wave factors for different microphones 14 in the array of microphones 14. In a third sub-step 213 the inverse wave field propagation is obtained by applying propagation factors

$$Exp(i * kz(kx, ky) * D)$$

to the coefficients of the Fourier transform for respective spatial frequencies in the array. Herein D is the measured distance between the microphones 14 and plate 10 and

$$kz(kx, ky) = sqrt((omega/c)^2 - kx^2 - ky^2)$$

The result of applying the propagation factors is an estimate of the spatial Fourier transform of the wave field at the surface of plate 10 for each of the time domain frequencies. Of course, an equivalent can be computed in the spatial domain instead of the spatial Fourier transform domain, using convolutions that corresponding to the effect of the propagation factors.

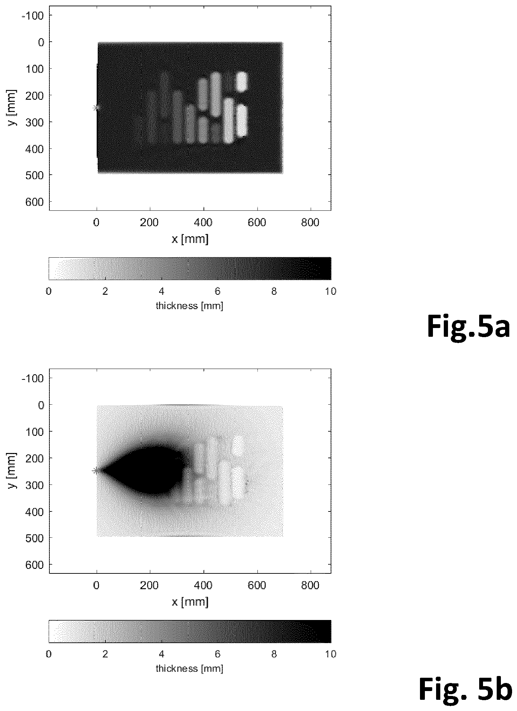

Figure 5a shows a reconstructed surface map of a flat plate obtained when the surface is parallel to but at a distance from the plane of the array of microphones 14, when fourth step 24 of computing this inverse surface model for a flat plate 10 is used. As can be seen, by comparison with figure 3b, fourth step 24 increases the sharpness of the map and reduces artifacts.

Figure 5b shows a reconstructed surface map of a curved plate that is obtained in the same way, i.e. when using a model that does not account for curvature.

When plate 10 is not flat, the more general computation of the wave field at the surface of plate 10 may be used wherein a sum over the positions of microphones of terms

$$P(x, y, omega)*\exp(i*omega*r/c)*\cos (phi)*(1+i*omega*r/c)/r^2$$

Using values of the distance r and the angle phi according to the shape of plate 10.

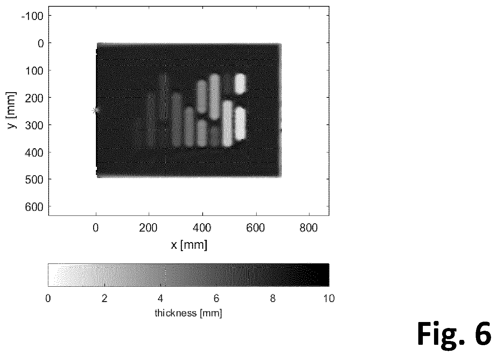

Figure 6 shows a reconstructed surface map of a curved plate obtained is obtained using this more general computation. As can be seen, the effects on the thickness map that were visible in figures 3c and 5b are avoided in this way. By comparing with figure 3a, it can be seen that loss of accuracy has been reduced.

When plate 10 is not flat, parameters of a (local) shape of the surface of plate 10 need to be known to perform the computation. The parameters of the shape of plate may be an array of heights over a reference plane coefficients of polynomials the define such heights, radii and centers of curvature etc. It may suffice to provide such parameters of a local part of the shape of plate 10. Part of the parameters may be known in advance, so that they need not be measured. For example, if the shape is known to be flat, no shape parameters need to be measured, or if the shape is spherical only a radius and a center of curvature are needed as parameters, and part of these may be known in advance. Similarly, if the orientation of array of microphones 14 relative to the surface of plate 10 is known in advance, it need not be measured.

The computation of sum of the terms over positions on the array of microphones 14 for an array of positions at the surface of plate 10 results in a representation of the wave field as a function of position. A Fourier transform of this wave field may be applied to obtain the Fourier transform of the wavefield on the surface of plate 10.

In an embodiment plate 10 may have a curved surface shape that is not flat the more general computation

Measurement of the object may be needed to obtain parameters of the shape. In an embodiment, surface vibrations due to the Lamb waves may be used to estimate the shape of plate 10 for obtaining parameters of the inverse wave field propagation model. In particular local wave propagation directions on the array of microphones 14 may be used to estimate the shape.

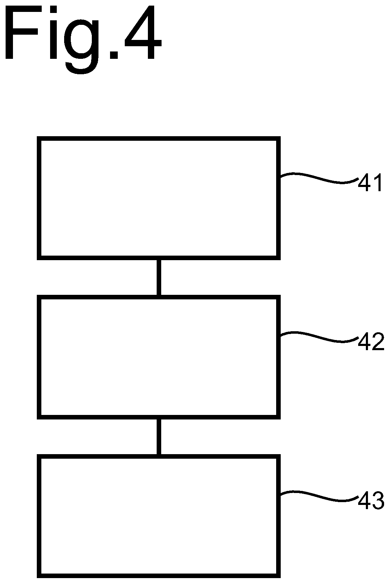

Figure 4 shows a flow chart of a shape estimation process. In a first step 41 processing system 18 obtains signals received by microphones 14 in response to excitation by transducer 12. This will first be described using a single time domain frequency. This may involve the use of an excitation pulse by transducer 12 with a narrow band of frequencies including the time domain frequency, and extracting signals from time windows of the signals of microphones 14 following the pulse.

In a second step 42 processing system 18 estimates local propagation directions on the array of microphones 14 from the extracted signals. This may involve computing spatial Fourier transforms of the extracted signals as a function of position in (possibly soft) spatial windows at a plurality of positions on the array of microphones 14 and determining 2D spatial frequencies at which the amplitude of the Fourier transform peaks in the different spatial windows. For each of the spatial windows, the direction from zero spatial frequency to the determined 2D spatial frequencies may be used as a 2D component of the local propagation direction at that spatial window. Given the 2D component of the direction and the wavelength in the fluid medium, the 3D local propagation direction at each spatial window can be determined.

In a ray model, the 3D local propagation direction at a spatial window provides information about the direction from which the sound has been received at the spatial window. Furthermore, given the index of refraction at the surface of plate 10 for sound that emerges from the surface, the 3D local propagation direction provides information about the orientation of the part of the surface of plate 10 that lies in the direction of reception from the spatial window. The use of a plurality of spatial windows provides such information for a plurality of patches of the surface of plate 10. By combining such orientation information obtained from a plurality of spatial windows the 3D shape of the surface of plate 10 can be estimated. A surface profile z(x,y) of the distance z between the array of microphones 14 as a function position x, y on the array of microphones 14 may be determined that is consistent with such measurements. Gaps can be filled in by optimizing a fitting criterion such as smoothness of the surface profile z(x,y).

In a third step 43 processing system 18 fits a surface profile z(x,y) of the distance z between the array of microphones 14 as a function position x, y on the array of microphones using a model that expresses the local propagation directions as a function of z(x,y). The fitted surface profile z(x,y) can then be used to obtain parameters of the inverse wave field propagation model as described in the preceding.

As described, the surface profile may be determined using excitation for a single time domain frequency. However, preferably a plurality of time domain frequencies is used. Thus improves the signal to noise ratio. When a broadband excitation pulse from transducer 12 is used, received signals of microphones 14 may be extracted from a time window following the pulse and a Fourier transform of the extracted signals from the time domain to the frequency domain may be computed. Alternatively, a plurality of narrow band excitation pulses at different frequencies may be used and signals for different frequencies from microphones 14 may be extracted from time windows following the pulses. This may be used to reduce the effect of wave spreading on the estimate of the 3D local propagation direction.

In an another embodiment, one or more sound transmitters (not shown) in the fluid medium in fixed spatial relation to array of microphones 14 may be used. Sound from sound transmitters in the fluid medium will predominantly be reflected from the surface of plate 10. This may be used in various ways. For example, incoming 3D local propagation direction estimates at the array of microphones may be used to provide orientation information about the part of the surface where the sound was reflected. As another example, the pulse response delay(s) at different microphones after a pulse from the sound transmitters may be used.

If the fluid medium is not homogeneous, a more complicated inverse propagation model may be used that accounts for the inhomogeneity. For example the fluid medium may comprise a gas, such as air, on one side of a boundary surface and liquid, such as water, on the other side of the boundary surface, where the boundary surface lies between array of microphones 14 and the surface of plate 10. In this case, the method may comprise measuring the position of the boundary surface (e.g. its distance to array of microphones 14 if the boundary surface is parallel to array of microphones 14) and using a combination of inverse propagation models for the gas and the liquid, with the position of the boundary as a parameter, as well as a model of the inverse of the effect of refraction and/or reflection at the boundary with that parameter.

Velocity map computation

For a Lamb wave there is a direct relation between the thickness of plate 10 and the phase velocity of a lamb wave. Hence a thickness map of plate 10 can be obtained from measurements of the phase velocity of the Lamb wave as a function of position on the surface of plate 10. Instead of a thickness map, maps of other quantities that are indicative of the thickness or thickness variation. For example, variations the phase velocity as a function of position on the surface of plate 10 are indicative of thickness.

Moreover, for a single time domain frequency, the phase velocity at a position on the surface of plate 10 is inversely proportional to the amplitude of the wave vector at that position (the local spatial rate of change of the wave factor in the local direction of propagation at that position). Hence the amplitude of the wave vector, its inverse and related quantities can be used as an indication of the thickness.

In principle, the phase velocity at a location on the surface of plate 10 may be determined by determining the magnitude of the gradient of the phase of the vibrations at the location, e.g. by estimating the gradient based on the phase value at a plurality of locations on the surface at and/or adjacent to the location for which the phase velocity is determined.

By way of example, an embodiment for computing the direct velocity map from the result of inverse wave field propagation for use in fifth step 25 will be described.

In its simplest form this embodiment uses measurements at a single time domain frequency. In a first sub-step 251 a set of spatial band pass filters is applied to the wave field on the surface of the plate 10. The bandpass filters in the set are indexed by the wave vector amplitude associated with the bandpass filter, substantially independent of its direction. Each bandpass filter passes wave field components with wave vector amplitude equal to its associated wave vector amplitude and wave vector amplitudes within a filter bandwidth that contains its associated wave vector amplitude.

When applied to the Fourier transform of the wavefield on the surface of the plate 10, this corresponds to multiplication of the Fourier transform of the wavefield as function of position on the surface of the plate 10, with filter factors $F(k_x, k_y; k)$ with a peak for $k_x^2 + k_y^2 = k^2$ and a bandwidth around this peak. Spatial domain representations of the filter results may be obtained by applying an inverse Fourier transform to the Fourier transform domain results. Of course, the band pass filtering may alternatively be performed using convolutions in the spatial domain. For each position on the surface of the plate 10, the filter results for the filters in the set define a set of values for different pass band frequency $k$.

Optionally a multiple dimensional Hilbert-transform is calculated and used for transforming the complex-valued filter results to real values. In a second sub-step 252, it is determined for each of an array of positions $(x, y)$ in the spatial domain representation which of the bandpass filters in the set produces the largest amplitude result at that position $(x, y)$. The passband frequency $k$ of that bandpass filter defines a wave vector amplitude $k(x,y)$ for that position $(x, y)$. This wave vector amplitude or its inverse may be used as an indication of the thickness of plate 10 at position $(x, y)$. Similarly, the ratio omega/$k(x,y)$, i.e. the phase velocity at the position $(x,y)$ may be used as such an indication. In sixth step 26 a map of such a thickness indications for a range of positions (x, y) may be displayed.

In an embodiment such phase velocity values may be determined for a plurality of time domain frequencies and averaged to obtain a compound phase velocity values as a function of position (x,y). Thus a more robust thickness indication may be obtained for the position (x,y).

Furthermore, instead of a velocity map, an image of a map of the thickness may be displayed, obtained by applying thickness calibration factors to the phase velocities or from a look-up table for looking up thickness values based om phase velocity values. The thickness calibration factors or the look-up table may be estimated from the dispersion curve from the measurements assuming a nominal thickness of the panel is known. If the dispersion curve is already known, this can be used instead. Once the dispersion curve is obtained, the local phase velocity measurements at each frequency can be translated into a local thickness/stiffness.

Microphone calibration

Using an array of microphones 14 is beneficial compared to use of a single microphone because the data acquisition time is reduced considerably. However, use of a plurality of microphones may create errors due to sensor-related variations in the measurement.

In an embodiment, calibration factors f(i) may be applied to the measurements of the sound signals from different microphones 14 indexed by "i", before the step of inverse wave field propagation. In a further embodiment time domain frequency dependent calibration factors f(i, omega) may be applied.

The calibration factors f(i) are used to ensure that the same results as with single microphone inspection can be obtained. The determination of the calibration factors comprises scanning the position of the array of microphones (e.g. in the length direction of the array if a linear, one dimensional array is used), where the scan step size equals the pitch of the array. This means that a scan step moves each microphone 14 in the array to the position of the next microphone 14 (for those microphones 14 where there is a next microphone). If the microphones 14 would have the same sensitivity, the responses of the different microphones to the same excitation, when at the same position should be equal, regardless of the effect of plate 10 on the response. However, because of inter-microphone variations, significant differences in response magnitude and phase may be present.

In the process of selecting calibration factors, processing system 18 causes the array of microphones 14 to move by a plurality of such scan steps. Processing system 18 records responses x(i) of the different microphones indexed by "i" when at the same position, in response to equal excitations with transducer 12. From the recorded responses, processing system 18 calculates a set of calibration factors that equalize the response of each microphones 14 when at a same position. This may be done for example by setting the calibration factor f(i) to f(i)=x(ref)/x(i). Herein, the reference response x(ref) may be the response of one of the microphones that is used as reference, or another reference such as an average of the response of different microphones. Alternatively, a set of calibration factors may be selected that minimizes a combination of deviations between the responses of the microphones 14 at a plurality of time delays and/or at a plurality of positions. Optionally, different sets of calibration factors f(i, omega) may be computed for different excitations frequencies.

Moreover this method can be used to verify that all microphones in the array work properly.

Although an example has been described wherein the wave vector amplitude is used to form an image of the thickness of a plate, using the dispersion relation for Lamb waves, it should be appreciated that the wave vector amplitude may be alternatively be used to form an image. In this case the thickness of the structure may be so large that fluid-solid interface waves are excited, such as Rayleigh or Scholte waves. Such an image may be representative of position dependent variation of local properties of a structure such as variation of stiffness (or elasticity modulus), density and Poisson ratio. In turn such properties may be indicative of the material composition in the structure or its moisture content. The structure may be a concrete building structure for example. It has been confirmed experimentally for measurements using Rayleigh waves propagating in concrete that such waves have sufficient out of plane motion to be detected.

Although it is preferred to use lowest order waves, e.g. A0 mode Lamb waves, it should be noted that higher order waves may be used instead. It suffices that the mode comprises out-of-plane motion so that a measurable amount of sound energy radiates into the medium between the structure and the array of microphones 14.

**Claims**

1. A method of determining a position dependent wave vector amplitude of vibrations on a surface of a structure, the method comprising

   - providing an array of microphones in a fluid medium outside the structure at a measurement position configured to receive sound from the surface of the structure;

- generating vibrations in the structure, whereby the sound is generated outside the structure by leakage of sound waves from the surface of the structure;
- using the array of microphones to obtain measured signals from the sound at the microphones;
- obtaining a measurement of at least one parameter of an inverse wave field propagation model for sound propagation in the fluid medium between the surface of the structure and the array of microphones, wherein the measurement of the at least one parameter depends on the measurement position where the array of microphones is provided;
- applying the inverse wave field propagation model to the measured signals to obtain a position dependent estimation of the sound amplitude and/or phase at the surface;
- computing the wave vector amplitude of the vibration as a function of position on the surface from the position dependent estimation.

2. A method according to any one of the preceding claims, wherein the surface of the structure is flat and the array of microphones is a flat planar array, parallel to the surface of the structure, and wherein obtaining the measurement of at least one parameter comprises obtaining a measurement of a distance between the surface of the structure and the array of microphones.

3. A method according to any one of the preceding claims, wherein the array of microphones is an at least partly synthetic array, realized by moving at least one microphone relative to the structure along a direction transverse to the normal direction of at least part of the surface of the structure, and obtaining the measured signals in synchrony with the generation of the vibrations.

4. A method according to any one of the preceding claims, comprising using a property of sound received by at least one of the microphones of the array of microphones to measure the distance.

5. A method according to any one of the preceding claims, wherein the surface of the structure is a curved surface and wherein the inverse wave field propagation model is a structure surface shape dependent model, the at least one parameter being structure surface dependent.

6. A method according to any one of the preceding claims, comprising using sound received by at least one of the microphones of the array of microphones to measure directions from which sound waves arrive at the array of microphones from the surface of the structure, determining an estimated shape of the surface of the structure from the directions and setting the at least one parameter of the inverse wave field propagation model according to said estimated shape.

7. A method according to any one of the preceding claims, comprising

- moving the array of microphones to successive different measurement positions relative to the structure,
- receiving sound from the surface of the structure with the array of microphones at each of the successive different measurement positions,
- applying the inverse wave field propagation model to the measured signals of each of the successive different measurement positions to obtain a position dependent estimation of the sound amplitude and/or phase at the surface for the measurement position; and
- computing the wave vector amplitude of the Lamb wave as a function of position on the surface from the position dependent estimation for the measurement position;
- integrating the wave vector amplitude obtained for the different measurement positions into a map.

8. A method according any one of the preceding claims, wherein the structure is a plate and the vibrations are part of a Lamb wave, the method comprising displaying an image of a map of the computed position dependent wave vector amplitude or another indication of position dependent thickness of the plate.

9. A method according to any one of the preceding claims, the method comprising obtaining preliminary measured signals from the sound at the microphones and obtaining the measured signals by applying calibrations factors of individual ones of the microphones to the preliminary measured signals, wherein the calibrations factors are determined by

- moving the array of microphones relative to the surface of the surface of the structure so that the individual ones of the microphones are successively moved to a same reference position relative to the surface of the structure,
- obtaining calibration measurements from the individual ones of the microphones each when the individual one of the microphone is at the reference position, and
- determining the calibration factors to compensate for differences between the calibration measurements obtained from the individual ones of the microphones.

10. An acoustic inspection device comprising

    - a carrier
    - an array of microphones fixed to the carrier, or at least one microphone fixed to the carrier and means to synthesize the array of microphones using the at least one microphone;
    - a transducer configured to generate vibrations in a structure;
    - a processing system configured to obtain a measurement of at least one parameter of an inverse wave field propagation model; obtain measured signals from the microphones; apply the inverse wave field propagation model to the measured signals to obtain a position dependent estimation of the sound amplitude and/or phase at the surface; and to compute the wave vector amplitude of the Lamb wave as a function of position on the surface from the position dependent estimation.

11. The acoustic inspection device of claim 10, comprising a display device, the processing system being configured to cause the display device to display an image of a map of the computed position dependent wave vector amplitude or another indication of position dependent thickness of the structure.

12. The acoustic inspection device of claim 10 or 11, comprising a movement actuator configured to move the carrier with the array of microphones to successive different relative positions relative to the structure, the processing circuit being configured to

    - cause the movement actuator to move the carrier with the array;
    - receive sound from the surface of the structure with the array of microphones at each of the successive different measurement positions,
    - obtain the measurement of at least one parameter of the inverse wave field propagation model for at least different measurement positions;
    - apply the inverse wave field propagation model to the measured signals of each of the successive different measurement positions to obtain a position dependent estimation of the sound amplitude and/or phase at the surface for the measurement position; and
    - compute the wave vector amplitude of the Lamb wave as a function of position on the surface from the position dependent estimation for the measurement position;
    - integrate the wave vector amplitude obtained for the different measurement positions into a map.

13. The acoustic inspection device of any one of claims 10-12, wherein the array of microphones is a flat planar array.

14. The acoustic inspection device of any one of claims 10-13, wherein the processing circuit is configured to use sound received by at least one of the microphones of the array of microphones to measure a distance between the array of microphones and the structure, for use in the at least one parameter.

15. The acoustic inspection device of any one of claims 10-14, wherein the processing circuit is configured to use sound received by the microphones of the array of microphones to measure directions from which sound waves arrive at the array of microphones, estimate a shape of the surface of the structure from the directions and set the at least one parameter of the inverse wave field propagation model according to said shape.

16. The acoustic inspection device of any one of claims 10-14, wherein the processing circuit is configured to obtain preliminary measured signals from the sound at the microphones and to obtain the measured signals by applying calibrations factors of individual ones of the microphones to the preliminary measured signals, wherein the calibrations factors are determined by

    - moving the array of microphones relative to the surface of the structure so that the individual ones of the microphones are successively moved to a same reference position relative to the surface of the structure,
    - obtaining calibration measurements from the individual ones of the microphones each when the individual one of the microphone is at the reference position, and

- determining the calibration factors to compensate for differences between the calibration measurements obtained from the individual ones of the microphones.

# Fig.1

# Fig.2

true thickness map

**Fig.3a**

# Fig. 3b

# Fig. 3c

# Fig.4

41

42

43

**Fig.5a**

**Fig. 5b**

Fig. 6

Europäisches
Patentamt

European
Patent Office

Office européen
des brevets

# EUROPEAN SEARCH REPORT

Application Number

EP 21 16 5689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PÖRTZGEN N ET AL: "Advances in Imaging of NDT Results", WCNDT. WORLD CONFERENCE ON NDT, XX, XX, 30 August 2004 (2004-08-30), pages 1-8, XP002311012, * the whole document * | 1-16 | INV. G01N29/04 G01N29/11 |
| A,D | KR 101 693 710 B1 (UNIV SEJONG IND ACAD COOP FOUND [KR]) 17 January 2017 (2017-01-17) * abstract; figures 1,2 * * paragraphs [0008] - [0033] * | 1,10 | |
| A | NIELS PORTZGEN ET AL: "Inverse wave field extrapolation: a different NDI approach to imaging defects", IEEE TRANSACTIONS ON ULTRASONICS, FERROELECTRICS AND FREQUENCY CONTROL, IEEE, US, vol. 54, no. 1, 1 January 2007 (2007-01-01), pages 118-127, XP011152438, ISSN: 0885-3010, DOI: 10.1109/TUFFC.2007.217 * the whole document * | 1,10 | |

TECHNICAL FIELDS
SEARCHED (IPC)

G01N

The present search report has been drawn up for all claims

| Place of search | Date of completion of the search | Examiner |
|---|---|---|
| Munich | 20 August 2021 | Uttenthaler, Erich |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 21 16 5689

This annex lists the patent family members relating to the patent documents cited in the above-mentioned European search report.
The members are as contained in the European Patent Office EDP file on
The European Patent Office is in no way liable for these particulars which are merely given for the purpose of information.

20-08-2021

| Patent document cited in search report | Publication date | Patent family member(s) | Publication date |
|---|---|---|---|
| KR 101693710 B1 | 17-01-2017 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101693710

**Non-patent literature cited in the description**

- **FLYNN et al.** Toward utilizing Full-field Laser-Ultrasound for Practical Nondestructive Inspection with Acoustic Wavenumber Spectroscopy. *2018 IEEE International Ultrasonics Symposium (IUS),* 2018, 1-7

- Visualization of hidden delamination and debonding in composites through noncontact laser ultrasonic scanning. *Composites Science and Technology,* 2014, vol. 100, 10-18